# NEUE EUROPÄISCHE PATENTSCHRIFT

(11) **EP 0 821 618 B2**
(45) Veröffentlichungstag und Bekanntmachung des Hinweises auf die Entscheidung über den Einspruch: **17.04.2002**
(45) Hinweis auf die Patenterteilung: 10.02.1999
(21) Anmeldenummer: 96911998.1
(22) Anmeldetag: 03.04.1996
(51) Int. Cl.: B01J 2/16

(54) **VERFAHREN UND VORRICHTUNG ZUR HERSTELLUNG VON GRANULATEN DURCH WIRBELSCHICHT-SPRÜHGRANULATION**
PROCESS AND DEVICE FOR PRODUCING GRANULATES BY FLUIDISED BED SPRAY GRANULATION
PROCEDE ET DISPOSITIF DE PRODUCTION DE GRANULES PAR GRANULATION PAR PULVERISATION EN LIT FLUIDISE

(30) Priorität: 21.04.1995 DE 19514187
(43) Veröffentlichungstag der Anmeldung: 04.02.1998
(73) Patentinhaber: Degussa AG, 40474 Düsseldorf (DE)
(72) Erfinder: SCHÜTTE, Rüdiger, D-60325 Frankfurt (DE); KLASEN, Claas-Jürgen, D-63579 Freigericht (DE); BEWERSDORF, Martin, D-63571 Gelnhausen (DE); ALT, Hans-Christian, D-63571 Gelnhausen (DE)
(86) Internationale Anmeldenummer: EP9601453
(87) Internationale Veröffentlichungsnummer: WO9633009

(56) Entgegenhaltungen:
- EP-A- 0 332 929
- DD-A- 228 458
- DE-A- 2 500 601
- DE-A- 3 204 466
- DE-A- 3 716 968
- DE-A- 3 716 969
- DE-A- 4 329 205
- DE-B- 1 294 352
- JP-A- 2 090 957
- US-A- 3 549 731
- US-A- 4 237 814
- MANUFACTURING CHEMIST & AEROSOL NEWS, MANUFACTURING CHEMIST & AEROSOL NEWS, Januar 1978, Januar 1978, Seiten 23-32, XP002009140 Seiten 23-32, XP002009140 E. SIMON: "containment of hazards in E. SIMON: "containment of hazards in fluid-bed technology" fluid-bed technology"
- AUFBEREITUNGS TECHNIK, AUFBEREITUNGS TECHNIK, Bd. 8, Nr. 9, September 1967, WIESBADEN Bd. 8, Nr. 9, September 1967, WIESBADEN DE, DE, Seite 474 XP002009141 "Benetzung, Seite 474 XP002009141 "Benetzung, Mischung und Granulierung von Feststoffen Mischung und Granulierung von Feststoffen mit Flüssigkeiten" mit Flüssigkeiten"
- Archiv for Pharmaci OG Chemi, Sci. Archiv for Pharmaci OG Chemi, Sci. Ed.5,1977, p. 51-60 Ed.5,1977, p. 51-60

## Beschreibung

Die Erfindung richlet sich auf ein Verfahren zur Herstellung von Granulaten durch Wirbelschicht-Sprühgranulation sowie eine Vorrichtung, welche sich zur Durchführung des Verfahrens in besonderer Weise eignet.

Durch Wirbelschicht-Sprühgranulation können ursprünglich flüssige Produkte, insbesondere Suspensionen und Lösungen, aber auch Schmelzen, in freifließende, staubarme, körnige Feststoffe, nachfolgend als Granulate bezeichnet, umgewandelt werden. Bei der Wirbelschicht-Sprühgranulation werden in einer Wirbelschicht befindliche feste Partikel, welche im wesentlichen kleiner sind als die zu erzeugenden Partikeln, mit einem flüssigen Ausgangsstoff solange besprüht und gleichzeitig getrocknet, bis die Partikel die gewünschte Korngröße erreicht haben. Unter dem Begriff "im wesentlichen" ist zu verstehen, daß außer den zuvor genannten kleineren Partikeln, wozu auch die Keime zählen, Partikel der Wunschkorngröße anwesend sein können. Um einen kontinuierlichen Prozeß zu gewährleisten, muß sichergestellt sein, daß der Wirbelschicht beständig Keime zugeführt oder unmittelbar in der Wirbelschicht diese Keime gebildet werden und Granulat aus der Wirbelschicht abgezogen wird. Um ein Granulat mit engem Kornspektrum zu erhalten, wird dieses klassierend aus dem Wirbelbett ausgetragen oder unter Verwendung üblicher externer Sichtgeräte klassiert; die beim Klassieren erhaltenen feinen Partikel, welche nicht der Wunschkomgröße entsprechen, werden als Keime der Wirbelschicht wieder zugeführt. Bei klassierendem Austrag und Rückführung der zu kleinen Partikeln enthält die Wirbelschicht alle Kornfraktionen vom Keim bis zum Granulat der Wunschkomgröße Eine Übersicht über die kontinuierliche Wirbelschicht-Sprühgranulation vermittelt H. Uhlemann in Chem.-Ing.-Tech. 62 (1990) Nr. 10, S. 822-834; in diesem Dokument werden die Prinzipien der Wirbelschicht-Sprühgranulation, Aspekte zum Granulatwachstum und zur Fluidisierung, verschiedene Verfahrensvarianten und Komponenten der Wirbelschicht-Sprühgranulatoren beschrieben.

Je nach der Bauart des Wirbelschicht-Sprühgranulators wird der gelöste oder/und suspendierte Feststoffe enthaltende flüssige Ausgangsstoff oder eine Schmelze von oben, von der Seile oder von unten in das Bett gesprüht. Um einen ausreichenden Stoffdurchsatz zu gewährleisten, müssen die in der Vorrichtung angeordneten Sprühdüsen die gesamte Wirbelschicht erfassen. Es muß eine gleichmäßige Flächenbeaufschlagung erfolgen. Hierzu sind zahlreiche Düsen zu installieren, was wegen der Verrohrung und der notwendigen meß- und regelungstechnischen Einrichtungen einen erheblichen Installationsaufwand erfordert. Zusätzlich sind derartig viele Düsen auch empfindlich gegen Verstopfungen und Ankrustungen, so daß zu Reinigungszwecken häufig Stillstände erforderlich sind.

Ein Verfahren und eine Vorrichtung zur Herstellung eines Granulats mittels einer Sprühmix-Apparatur ist aus Aufbereitungs-Technik Band 8, Nr. 9 (1967) Seite 474 bekannt. Partikel werden mittels eines Zyklons dem Reaktor zugeführt. Die auf Spiralbahnen absinkenden Partikel gelangen in der unteren Hälfte des Behälters in eine Sprühzone, worin eine Agglomeration erfolgt. Der Behälter weist radial angeordnete Düsen auf, deren Sprühkegel sich gegenseitig überlappen.

Aufgabe der vorliegenden Erfindung ist es, ein verbessertes Verfahren zur Wirbelschicht-Sprühgranulation aufzuzeigen, das die zuvor genannten Nachteile vermeidet; somit sollte unter Verwendung weniger Düsen ein hoher Flüssigkeitsdurchsatz erzielt werden. Wegen der überproportionalen Zunahme des Sprühimpulses bei gleichem zu erzeugenden Tropfendurchmesser und der größeren Strahlausbreitung mit zunehmender Düsengröße mußte ein Weg gefunden werden, ein Durchschlagen des Sprühstrahls auf die Wände der Granulationsvorrichtung beim Besprühen von der Seite zu vermeiden, da ein derartiges Durchschlagen in der Regel rasch zum Zusammenbrechen des Prozesses führt.

Die Aufgabe wird gelöst durch ein Verfahren zur Herstellung von Granulaten durch Wirbelschicht-Sprühgranulation, umfassend Einsprühen eines oder mehrerer flüssiger Ausgangsstoffe mittels Sprühdüsen in eine im wesentlichen kleinere feste Partikel als die herzustellenden Granulate enthaltende Wirbelschicht, Verdampfen flüchtiger Bestandteile der (des) versprühten Ausgangsstoffe(s), Zufuhr von Keimen in die Wirbelschicht oder/und Bildung von Keimen in derselben und Austrag von Granulaten aus der Wirbelschicht, das dadurch gekennzeichnet ist, daß man die Wirbelschicht-Sprühgranulation in einer Fließrinne mit entlang der Fließrinne an beiden seiten oberhalb des Auströmbodens und underhalb Wirbelschicht obergrenze angeordnet Sprühdüsen durch führt, wobei man jeweils mindestens zwei einander zumindest teilweise zugekehrte Sprühdüsen derart ausrichtet, daß die Sprühstrahlen frontal oder einen Winkel zwischen 90° und 180° aufein andertroffen und daß man die Sprühmenge derart einstellt, daß ihre Sprühstrahlen innerhalb der Wirbelschicht aufeinandertreffen und im wesentlichen kein Flüssigkeitsdurchschlag auf eine die Wirbelschicht begrenzende Fläche oder aus der Wirbelschicht heraus erfolgt. Die Unteransprüche richten sich auf bevorzugte Ausführungsformen des erfindungsgemäßen Verfahrens.

Dadurch, daß die Sprühstrahlen von jeweils zwei zumindest teilweise einander zugekehrten Sprühdüsen frontal oder in einem Winkel zwischen 90° und 180°, insbesondere zwischen 150° und 180°, innerhalb der Wirbelschicht aufeinandertreffen, kommt es zu einer Richtungsänderung der Sprühimpulse der Sprühstrahlen. Es sind jeweils zwei Sprühdüsen zumindest teilweise einander zugekehrt. Die Gesamtimpulse der aufeinandertreffenden Sprühstrahlen und deren Richtung werden derart aufeinander abgestimmt, daß ein Flüssigkeitsdurchschlag auf die jeweils gegenüberliegende Wand, auf den Wirbelschichtboden oder in den Raum oberhalb der eigentlichen Wirbelschicht weitestgehend verhindert wird. Zum Besprühen der Wirbelschicht werden die Düsen seitlich paarweise genau oder gegebenenfalls auch versetzt gegenüberliegend angeordnet, so daß die Wirbelschicht von der Seite besprüht wird. Die Richtung der Sprühstrahlen kann beim Besprühen von der Seite horizontal oder leicht abwärts oder leicht aufwärts gerichtet sein. Zweckmäßigerweise bildet die von der Verbindungslinie zwischen zwei einander zugekehrten Sprühdüsen und deren Sprühstrahlen gebildete Dreiecksfläche gegenüber der Horizontalen einen Winkel zwischen 0° und +90°, insbesondere zwischen größer 0° und +15°; die Spitze des Dreiecks (Treffpunkt der Sprühstrahlen) weist also nach oben. Dadurch, daß die Sprühstrahlen von jeweils einander zumindest teilweise zugekehrten Sprühdüsen innerhalb der Wirbelschicht aufeinandertreffen, kommt es einerseits zu einem weiteren Aufreissen der Sprühstrahlen, und zusätzlich ist eine gute Benetzung der in der Wirbelschicht befindlichen Keime mit den Flüssigkeitströpfchen aus den Sprühstrahlen gewährleistet. Durch die Richtungsänderung des Sprühimpulses einzelner Teilchen beim Aufeinandertreffen werden auch solche Bereiche der Wirbelschicht erfaßt, wozu bisher mehrere Düsen zusätzlich verwendet werden mußten. Sofern zwei einander zugekehrte Düsen in einem Winkel aufeinandersprühen, übt der hieraus resultierende Vektor einen Impuls auf das Wirbelgut aus, so daß es zu einer Förderung der Partikel in jene Richtung kommt, in welche die Spitze des aus den Sprühstrahlen gebildeten Winkels weist. Je nach der Ausgestaltung der verwendeten Vorrichtung zur Wirbelschicht-Sprühgranulation können die Sprühstrahlen frontal, also in einem Winkel von 180°, oder in einem Winkel von kleiner 180° aufeinandertreffen. Zweckmäßigerweise ist der Gesamtimpuls eines jeden Sprühstrahls von zwei zumindest teilweise einander zugekehrten Sprühdüsen im wesentlichen gleich groß; dies läßt sich in einfacher Weise dadurch erzielen, daß gleiche Düsen verwendet und gleiche Düsen-Betrlebsparameter (Flüssigkeitsmenge und -druck sowie Gasdruck) eingestellt werden.

Zum Versprühen eines flüssigen Ausgangsproduktes können Ein- oder Zweistoffdüsen verwendet werden. Bei Zweistoffdüsen, welche bevorzugt werden, ist der zweite Stoff üblicherweise Luft, Wasserdampf oder ein Inertgas, um den aus der Düse austretenden Strahl aufzureissen und in kleine Tröpfchen zu zerteilen. Anstelle eines einzigen flüssigen Ausgangsstoffes können auch zwei oder mehrere flüssige Ausgangsstofte zum Aufbau eines Granulats in die Wirbelschicht eingesprüht werden. Hierbei können die zunächst flüssigen Ausgangsstoffe im Granulat nebeneinander vorliegen, oder die Ausgangsstoffe können unmittelbar nach dem Versprühen und/oder während der Granulatbildung miteinander reagieren. Zur Herstellung derartiger Reaktionsprodukte, beispielsweise aus einer flüssigen Reaktionskomponente sowie einer in Wasser oder einem Lösungsmittel gelösten oder suspendierten Komponente, ist es vorteilhaft, die beiden flüssigen Ausgangsstoffe unter Verwendung einer Dreistoffdüse und eines Gases als Treibmittel in die Wirbelschicht einzusprühen. Sofern eine vorzeitige Reaktion der Reaktionskomponenten innerhalb des Düsenkörpers vermieden werden soll, ist es vorteilhaft, Dreistoffdüsen zu verwenden, welche eine externe Mischung der Reaktionskomponenten gewährleisten. Eine für diesen Zweck geeignete Dreistoffzerstäuberdüse umfaßt einen Düsenkörper und ein Düsenmundstück, wobei das Düsenmundstück ein Zentralrohr und zwei darum coaxial angeordnete Mantelrohre aufweist und das Zentralrohr an der Düsenspitze über die Enden der Mantelrohre hinausreicht. Den Dreistoffdüsen werden die Reaktionskomponenten im entsprechend erforderlichen stöchiometrischen Verhältnis zugeführt.

Das erfindungsgemäße Verfahren unter Verwendung der zuvor genannten Dreistoffdüsen eignet sich in besonderer Weise zur Herstellung von granulatförmigen Aktivsauerstoffverbindungen, wie Natriumperboraten und Natriumpercarbonaten sowie deren Hydraten. Natriumpercarbonat läßt sich aus einer wäßrigen Sodalösung und einer wäßrigen Wasserstoffperoxidlösung herstellen. Die Herstellung von Natriumpercarbonat der Formel 2 Na₂CO₃ · 3 H₂O₂ erfolgt in Analogie zum Verfahren gemäß der DE-Patentanmeldung 43 29 205, wobei jedoch die Dreistoffdüsen erfindungsgemäß angeordnet werden.

Zum kontinuierlichen Betrieb der Wirbelschicht-Sprühgranulation muß sichergestellt werden, daß in der Wirbelschicht stets eine ausreichende Zahl von Keimen und/oder anderen Partikeln, welche kleiner sind als das gewünschte Granulat, vorhanden sind. Die Keime können der Wirbelschicht zugeführt werden, etwa in Form des Staubs, der in einer der Granulationsanlage nachgeschalteten Staubabscheidung zurückgewonnen wurde oder/und in Form des Unterkorns, das aus dem aus der Wirbelschicht ausgetragenen Granulat abgetrennt wurde. Dieses Unterkorn kann sowohl unter Verwendung eines klassierend wirkenden Granulataustrags in der Wirbelschicht verbleiben oder auch mittels einer dem Granulataustrag nachgeschalteten üblichen Sichtvorrichtung abgetrennt und der Wirbelschicht wieder zugeführt werden. Keime können auch unmittelbar innerhalb der Wirbelschicht gebildet werden: Keime entstehen einerseits aus Tröpfchen, welche vor dem Trocknen keinen anderen Keim getroffen haben, andererseits durch Bruch und Abrieb aufgrund der Partikelbewegung; ferner können innerhalb der Wirbelschicht Partikel verkleinernde Vorrichtungen installiert sein, wodurch aus größeren Teilchen mehrere kleinere Teilchen entstehen. Schließlich kann es durch die erfindungsgemäße Anordnung von jeweils zwei Sprühdüsen, deren Sprühstrahlen innerhalb der Wirbelschicht mehr oder weniger frontal aufeinandertreffen, als Folge des hohen Sprühimpulses des jeweiligen Sprühstrahls zu einem Strahlmühleneffekt und damit zur Bildung von Keimen kommen. Die Größe des Strahlmühleneffekts läßt sich durch die Menge des Gases, welches durch die Sprühdüsen strömt, bei gegebener Düsengeometrie also über den Druck, sowie durch den Winkel, in welchem Sprühstrahlen einander zugekehrter Sprühdüsen aufeinandertreffen, steuern.

Die Aufrechterhaltung der Wirbelschicht erfolgt in an sich bekannter Weise unter Verwendung eines geeigneten Fluidisierungsgases, meistens Luft. Da während der Wirbelschicht-Sprühgranulation die mit dem flüssigen Ausgangsprodukt eingebrachten flüchtigen Bestandteile verdampft und abgetrieben werden müssen, wird die hierfür erforderliche Trocknungsenergeie üblicherweise mit dem Fluidisierungsgas zugeführt. Die Temperatur des Fluidisierungsgases wird dergestalt gewählt, daß in Verbindung mit der eingedüsten Flüssigkeitsmenge die resultierende Wirbelschicht-Temperatur keinen nachteiligen Effekt auf die Ausgangsstoffe und das herzustellende Granulat ausübt. Im Falle von thermisch empfindlichen Stoffen, etwa dem zuvor erwähnten Natriumpercarbonat, sollte die Temperatur der Wirbelschicht im wesentlichen unterhalb der Zersetzungstemperatur der eingesetzten Ausgangsprodukte sowie des herzustellenden Granulats liegen.

Gemäß des erfindungsgemäßen Verfahrens wird zur Wirbelschicht-Sprühgranulation ein Fließbetttrockner, nachfolgend als Fließrinne bezeichnet, verwendet, deren Boden als Anströmboden ausgebildet ist und welche entlang der Fließrinne seitlich angeordnete Sprühdüsen, gegenüberliegend oder gegebenenfalls leicht versetzt gegenüberliegend, aufweist die Düsen befinden sich in den Seitenwänden entlang der Fließrinne oder fließrinnenartigen Modulen auf einer Höhe oberhalb des Auskömbodeus und unterhalb der Wirbelschichtobegrenze. Vorzugsweise liegen die Sprühdüsen jeweils genau gegenüber. Die Düsenachse genau oder versetzt gegenüberliegender Düsen können dabei derart ausgerichtet sein, daß die Sprühstrahlen senkrecht aufeindertreflen und daß die Sprühstrahlen einen vorzugsweise stumpfen Winkel bilden. Das aus zwei einander zumindest teilweise zugekehrten Düsen und dem Treffpunkt der Düsenstrahlen gebildete Dreieck liegt innerhalb der Wirbelschicht; es kann horizontal, aber auch leicht aufwärts steigend oder abwärts fallend ausgerichet sein.

Um einen störungsfreien Betrieb der Wirbelschicht-Sprühgranulation zu ermöglichen, hat es sich wenden, welcher nasenlochartige Luftaustrittsöffnungen aufweist: Hierdurch werden in den bodennahen Zonen der Schicht die Granulate unter einem Winkel von kleiner 90° gegen die Horizontale schräg angeströmt, was eine gezielte Förderung der Granulate in diesem Bereich zur Folge hat. Der zuvor genannte, aus zwei einander teilweise zugekehrten Düsenstrahlen resultierende Düsenimpuls kann zu der genannten Bodenströmung gleichgerichtet oder ihr entgegengesetzt sein. Im letzteren Falle wird die Aufenthaltsdauer der Partikel in der Wirbelschicht verlängert. Gemäß einer weiteren bevorzugten Ausführungsform erfolgt eine Zirkulation der Partikel am Boden in Richtung des Austrags des Granulats und im oberen Bereich der Wirbelschicht in Richtung auf den Anfang der Fließrinne.

Die Fließrinne kann als eine einzige Kammer ausgebildet oder in mehrere Kammern unterteilt sein. Als Trennelement zwischen den Kammern dienen kombinierte Unter- und Überlaufwehre; gemäß einer zweckmäßigen Ausbildungsform weisen solche Wehre am Boden und in der Höhe der expandierten Wirbelschicht einen horizontalen Spalt auf. Durch die Düsenimpulse und/oder die durch den Anströmboden gerichtete Gaseintrittsströmung werden die sich in Bodennähe sammelnden größeren Partikeln in Richtung der Wehre transportiert und gelangen durch den unteren Spalt in die jeweils nächste benachbarte Kammer. Durch das flüssigkeitsartige Verhalten von Wirbelschichten erfolgt hierbei zwangsweise ein Rückfluß von Feststoff, der sich vorzugsweise im oberen Spalt ausbildet Dieser Rückstrom kann durch den aus dem Zusammentreffen von zwei Sprühstrahlen gebildeten resultierenden Vektor verstärkt werden, wenn dieser Vektor in die gleiche Richtung weist wie der gewünschte Rückstrom. Eine weitere Möglichkeit, den Rückfluß von Feststoff im oberen Bereich der Wirbelschicht zu verstärken, gelingt durch Unterdruckeinstellung in den Kammern, indem der Unterdruck zur jeweils nächsten Kammer abnimmt und dadurch ein pneumatischer Transport durch die Spalten oberhalb der Wirbelschicht in die jeweils vorgelagerte Kammer, also entgegen der am Wirbelschichtboden vorliegenden Flußrichtung, erzeugt wird.

Bei der Durchführung des erfindungsgemäßen Verfahrens können anstelle einer einfachen Fließrinne auch mehrere Fließrinnen modulartig nebeneinander angeordnet sein, etwa derart, wie dies aus der EP-B 0 332 929 bekannt ist. Im Unterschied zur Ausführungsform in diesem Dokument sind die Sprühdüsen im erfindungsgemäßen Verfahren nicht im Anströmboden, sondern innerhalb der Höhe der Wirbelschicht in den mehrere parallel angeordnete Module seitlich begrenzenden Wänden sowie geeigneten Halterungen für die Düsen zwischen den einzelnen Modulen.

Wie bereits ausgeführt, wird das erfindungsgemäße Verfahren in an sich bekannten Fließrinnen für die Wirbelschicht-Sprühgranulation durchgeführt, sofern jeweils mindestens zwei Sprühdüsen zumindest teilweise einander zugekehrt angeordnet werden, um durch das Aufeinandertreffen der Sprühstrahlen eine Richtungsänderung des Sprühimpulses jeden Sprühstrahls zu erhalten. Der werden Sprühdüsen derart angeordnet, daß sie von der Seite der Vorrichtung in die Wirbelschicht sprühen.

Zur Durchführung des erfindungsgemäßen Verfahrens wird eine Fließrinne oder eine aus parallel nebeneinanderliegenden fließrinnenartigen Modulen zusammengesetzte rechteckige Wirbelschichtgranulationsanlage verwendet, enthaltend einen Anströmboden, Vorrichtungen zum Zu- und Abführen eines Fluidisierungsgases, Vorrichtungen zum Austragen von Granulat und, sofern erforderlich, Eintragen von Keimen und/oder anderen kleineren Partikeln als die herzustellenden Granulate sowie mindestens zwei Sprühdüsen zum Versprühen eines oder mehrerer flüssiger Ausgangsstoffe, welche dadurch gekennzeichnet ist, daß zu beiden Seiten längs der Fließrinne oder fließrinnenartigen Module Sprühdüsen auf einer Höhe oberhalb des Anströmbodens und unterhalb der Wirbelschichtobergrenze angeordnet sind, wobei jeweils zwei genau oder versetzt gegenüberliegende Sprühdüsen derart ausgerichet sind, daß die Sprühstrahlen dieser zumindest teilweise einander zugekehrten Sprühdüsen innerhalb des Bereichs der Wirbelschicht aufeinandertreffen. Die Unteransprüche richten sich auf bevorzugte Ausführungsformen.

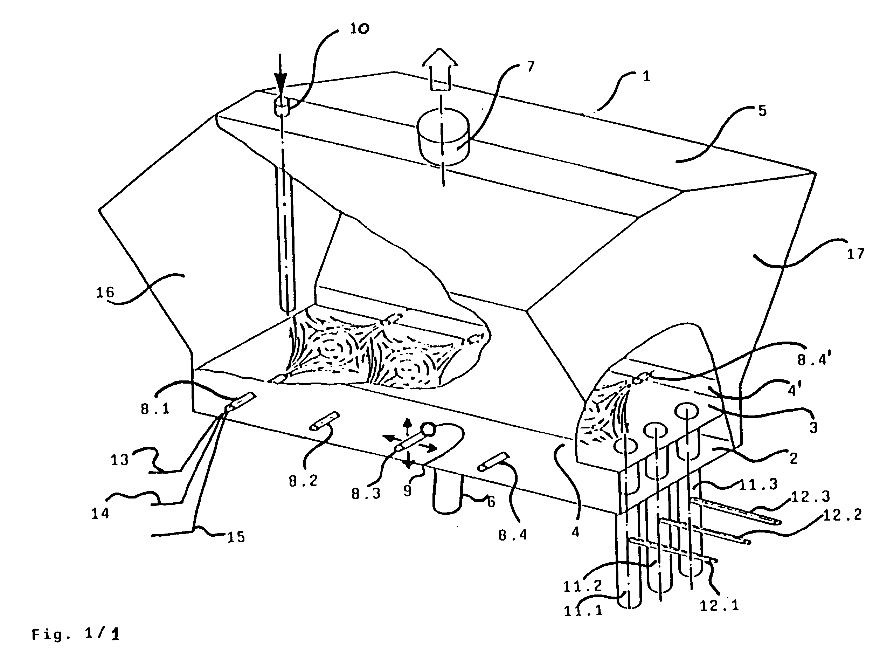

Figur 1/1 zeigt eine perspektivische, teilweise geöffnete Ansicht einer erfindungsgemäßen Fließrinne: Die Fließrinne 1 enthält einen Luftkasten 2, dem die Zuluft durch den Zuluftstutzen 6 zugeführt wird. Oberhalb des Luftkastens befindet sich der Anströmboden 3, der als Lochboden (Löcher nicht gezeigt) ausgebildet ist, wobei die Löcher derart ausgebildet sind, daß sie eine senkrechte oder schräge Ausströmung der Fluidisierungsluft erlauben. Vorzugsweise ist der Anströmboden als gewalzter Lochboden mit schrägen Austrittsöffnungen ausgebildet. Entlang der Fließrichtung ist die Fließrinne durch die Seitenwände 4 und 4' (gegenüberliegend) begrenzt, wobei diese Seitenwände vom Boden zur Abdeckhaube 5 senkrecht, nach außen geneigt oder kombiniert senkrecht/nach außen geneigt ausgebildet sein können. Die Fluidisierungsluft wird durch den Stutzen 6 zugeführt und durch den Stutzen 7 (Abluft-Peil) abgeführt. In der Seitenwand 4 sind im vorliegenden Fall wenig oberhalb des Anströmbodens vier Sprühdüsen 8.1, 8.2, 8.3 und 8.4 angeordnet; jeder Sprühdüse ist auf der gegenüberliegenden Wandseite 4' eine ihr zugekehrte weitere Düse angeordnet (bezeichnet ist nur die Düse 8.4'). Gemäß einer bevorzugten Ausführungsform sind die Düsen um ein Gelenk 9 nach oben, nach unten, nach vorne sowie nach rückwärts ausrichtbar (das Gelenk 9 und die Drehrichtungen sind nur im Falle der Düse 8.3 gezeigt). Externe Keime werden über die Eintragsvorrichtung 10 dem Fließbett zugeführt. Granulat wird aus dem Wirbelbett durch eine Austragsvorrichtung - hier drei Austragsrohre 11.1, 11.2 und 11.3 - ausgetragen, wobei die genannten Rohre unmittelbar am Anströmboden ansetzen. In der Figur sind die Austragsrohre als klassierend wirkende Vorrichtungen ausgebildet, wobei Klassierluft über die Leitungen 12.1, 12.2 und 12.3 der Austragsvorrichtung zugeführt wird. Die Sprühdüsen können als Ein- oder Mehrstoffdüsen ausgebildet sein; in der vorliegenden Figur sind sie als Dreistoffdüsen ausgebildet, wobei durch die Leitungen 13 und 14 jeweils ein flüssiger Ausgangsstoff und durch Leitung 15 ein Gas zum Versprühen zugeführt wird (die Zufuhrleitungen 13, 14 und 15 sind nur im Falle der Düse 8.1 dargestellt, bei den übrigen Düsen aus Gründen der Übersichtlichkeit jedoch weggelassen worden). Am Kopf und am Ende wird die Fließrinne durch die Wände 16 und 17 begrenzt. Im geöffneten Teil der Fließrinne sind resultierende Vektoren der aufeinander gerichteten Sprühstrahlen schematisch dargestellt

Der Produktaustrag 11.1, 11.2 und 11.3 kann als einfaches Rohr ausgebildet sein, wenn an die Gleichmäßigkeit des Granulatkorns keine hohen Ansprüche gestellt werden oder wenn sich an den Austrag eine Sichtvorrichtung anschließt. Sofern, wie in der Figur 1 gezeigt, der Austrag klassierend erfolgt, eignen sich hierfür gängige Sichtvorrichtungen, etwa solche, welche nach dem Prinzip der Zick-Zack-Sichtung arbeiten. Zweckmäßigerweise ist eine integrierte oder nachgeschaltete Klassiervorrichtung mit Vorrichtungen zur Rückführung des Unterkorns in die Wirbelschicht ausgestattet.

Gemäß einer weiteren Ausführungsform ist die Fließrinne in mehrere Kammern unterteilt, wobei die Trennwand jeweils als kombiniertes Unter- und Überlaufwehr ausgebildet ist; derartige Wehre weisen beispielsweise am Boden und in der Höhe der expandierten Wirbelschicht einen horizontalen Spalt auf.

Die zu beiden Seiten der Fließrinne oder der fließrinnenartigen Module angeordneten Sprühdüsen können versetzt angeordnet sein, sofern sie derart ausgerichtet sind, daß die Sprühstrahlen innerhalb der Wirbelschicht aufeinandertreffen. Vorzugsweiese sind die Sprühdüsen jedoch genau gegenüberliegend angeordnet, und zwar mit einer Ausrichtung des jeweiligen Düsenstrahls derart, daß diese senkrecht aufeinandertreffen oder in einem Winkel von vorzugsweise zwischen 150° und kleiner 180°.

Durch das erfindungsgemäße Verfahren ist es möglich geworden, in einfach gebauten Fließrinnen Wirbelschichtgranulate mit hoher Raum-Zeit-Ausbeute und bezüglich der Anzahl Düsen geringem Installationsaufwand zu gewinnen. Überraschenderweise kommt es an den Düsen zu praktisch keinen Ankrustungen, so daß Stillstandszeiten zur Reinigung der Wirbelschicht-Sprühvorrichtung weitgehend entfallen. Durch entsprechende Ausrichtung der gegenüberliegenden Düsen sowie Einstellung des Sprühimpulses jeden Sprühstrahis durch den gewählten Druck des Sprühgases ist es möglich, den Strahlmühleneffekt auszunutzen und die Keimanzahl innerhalb der Wirbelschicht und damit auch die Granulatgröße sicher zu steuern. Dabei ist zu beachten, daß der Druck des Sprühgases in gewissem Bereich auch das erzeugte Tropfenspektrum beeinflußt. Besondere Vorteile der erfindungsgemäßen Vorrichtung bestehen in ihrem einfachen Aufbau und darin, in ihr das erfindungsgemäße Verfahren sicher durchzuführen. Die erfindungsgemäße Düsenanordnung läßt sich ferner leicht in eine bestehende Vorrichtung zur Wirbelschicht-Sprühgranulation integrieren, indem die Düsen paarweise gegenüberliegend seitlich angeordnet werden.

Das erfindungsgemäße Verfahren wird anhand des nachfolgenden Beispiels, welches in der in Figur 1 beschriebenen Vorrichtung durchgeführt wurde, verdeutlicht.

### Beispiel

In einer Vorrichtung gemäß Figur 1/1 wurde Natriumpercarbonat durch Sprühgranulation hergestellt. Der Fließbetttrockner hatte eine Grundfläche von 3,3 m² bei der Breite 1 m. In den senkrechten Abschnitten der Seitenwände waren, gleichmäßig über der Länge verteilt und direkt gegenüberliegend, je 3 Düsen auf jeder Seite angeordnet. Die Austrittsöffnung der Düsen lag 100 mm oberhalb des Anströmbodens und 50 mm von der Seitenwand entfernt in der Wirbelschicht. Die Düsen waren ca. 10° gegen die Horizontale nach oben und ca. 15° in Förderrichtung geneigt. Verwendet wurden Dreistoffdüsen mit externer Mischung. Nach Fluidisierung des vorgelegten Bettinhalts wurde besprüht. Das Granulat wurde über drei, am Ende des Trockners bündig im Anströmboden angeordnete Öffnungen über einen Klassierluftstrom ausgetragen.

Die Betriebs- und Analysendaten während des stationären Versuchsbetriebs sind nachfolgender Tabelle zu entnehmen:

Einsatzstoffe:
Wäßrige Sodalösung (30 Gew.-% Soda, 1 Gew.-% Natriumwasserglas), Volumenstrom/Düse: 145 l/h
Wäßriges Wasserstoffperoxid (70 Gew.-%), Volumenstrom/Düse: 30 l/h
Düsenluftdruck: 3,5 bar (Überdruck)
Düsenluftmenge: 150 Nm³/h und Düse

Betriebsdaten:
Fluidisationsluftmenge: 10000 Nm³/h
Fluidisationslufttemperatur: 205 °C
Keimzufuhr: ca. 10 kg/h (mittlerer Korndurchmesser 0,1 mm)
Bettinhalt: ca. 800 kg

Mit diesen Einstellungen wurde ein Produktmassenstrom von ca. 485 kg/h erhalten. Die durch Siebung ermittelte Partikelgrößenverteilung ergab sich wie folgt:
>0,8 mm 18 %
>0,5 mm 51 %
>0,3 mm 26 %
<0,3 mm 5 %

## Patentansprüche

1. Verfahren zur Herstellung von Granulaten durch Wirbelschicht-Sprühgranulation, umfassend Einsprühen eines oder mehrerer flüssiger Ausgangsstoffe mittels Sprühdüsen in eine im wesentlichen kleinere feste Partikel als die herzustellenden Granulate enthaltende Wirbelschicht, Verdampfen flüchtiger Bestandteile der (des) versprühten Ausgangsstoffe(s), Zufuhr von Keimen in die Wirbelschicht oder/und Bildung von Keimen in derselben und Austrag von Granulaten aus der Wirbelschicht,
**dadurch gekennzeichnet,**
**daß** man die Wirbelschicht-Sprühgranulation in einer Fließrinne mit entlang der Fließrinne an beiden Seiten oberhalb des Anströmbodens und unterhalb der Wirbelschichtobergrenze angeordneten Sprühdüsen durchführt, wobei man jeweils mindestens zwei einander zumindest teilweise zugekehrte Sprühdüsen derart ausrichtet, daß die Sprühstrahlen frontal oder in einem Winkel zwischen 90° und 180° aufeinandertreffen und daß man die Sprühmenge derart einstellt, daß ihre Sprühstrahlen innerhalb der Wirbelschicht aufeinandertreffen und im wesentlichen kein Flüssigkeitsdurchschlag auf eine die Wirbelschicht begrenzende Fläche oder aus der Wirbelschicht heraus erfolgt.

2. Verfahren nach Anspruch 1,
**dadurch gekennzeichnet,**
**daß** die aufeinandertreffenden Sprühstrahlen einen Winkel zwischen 150° und 180° bilden.

3. Verfahren nach einem der Ansprüche 1 bis 2,
**dadurch gekennzeichnet,**
**daß** die von der Verbindungslinie zwischen zwei einander zugekehrten Sprühdüsen und deren Sprühstrahlen gebildete Dreiecksfläche gegenüber der Horizontalen einen Winkel zwischen 0° und +90°, insbesondere größer 0° und +15° bildet.

4. Verfahren nach einem der Ansprüche 1 bis 3,
**dadurch gekennzeichnet,**
**daß** der jeweilige Gesamtimpuls aufeinandertreffender Sprühstrahlen im wesentlichen gleich groß ist.

5. Verfahren nach einem oder mehreren der Ansprüche 1 bis 4,
**dadurch gekennzeichnet,**
**daß** man ein oder mehrere einander gegenüberliegende Düsenpaare entlang der Fließrinne innerhalb der Höhe der Winbelschicht anordnet.

6. Verfahren nach einem oder mehreren der Ansprüche 1 bis 5,
**dadurch gekennzeichnet,**
**daß** man während oder nach dem Austrag der Granulate eine Sichtung vornimmt und Granulate zu geringer Korngröße in die Wirbelschicht zurückführt.

7. Verfahren nach einem oder mehreren der Ansprüche 1 bis 6,
**dadurch gekennzeichnet,**
**daß** man eine in mehrere Kammern unterteilte Fließrinne verwendet, wobei die Trennwände zwischen den Kammern als am Boden und in der Höhe der expandierten Wirbelschicht jeweils einen horizontalen Spalt aufweisende Wehre ausgebildet sind.

8. Verfahren nach einem oder mehreren der Ansprüche 1 bis 7,
**dadurch gekennzeichnet,**
**daß** man als Sprühdüsen Dreistoffdüsen verwendet, womit zwei flüssige Ausgangsstoffe mittels eines Gases versprüht werden und die versprühten flüssigen Ausgangsstoffe erst außerhalb der Düse miteinander in Kontakt kommen.

9. Vorrichtung zur Wirbelschicht-Sprühgranulation zur Durchführung des Verfahrens gemäß einem der Ansprüche 1 bis 9, umfassend eine Fließrinne (1) oder eine aus parallel nebeneinanderliegenden fließrinnenartigen Modulen zusammengesetzte rechteckige Wirbelschichtgranulieranlage, enthaltend einen Anströmboden (3), Vorrichtungen zum Zu- und Abführen eines Fluidisierungsgases (6 und 7), Vorrichtungen zum Austragen von Granulat (11) und, sofern erforderlich, Eintragen von Keimen und/oder anderen kleineren Partikeln als die herzustellenden Granulate (10) sowie mindestens zwei Sprühdüsen (8) zum Versprühen eines oder mehrerer flüssiger Ausgangsstoffe,
**dadurch gekennzeichnet,**
**daß** zu beiden Seiten (4 und 4') längs der Fließrinne oder fließrinnenartigen Module Sprühdüsen auf einer Höhe oberhalb des Anströmbodens und unterhalb der Wirbelschichtobergrenze angeordnet sind, wobei jeweils zwei genau oder versetzt gegenüberliegende Sprühdüsen (8.4 und 8.4') derart ausgerichet sind, daß die Sprühstrahlen dieser einander zumindest teilweise zugekehrten Sprühdüsen innerhalb des Bereichs der Wirbelschicht aufeinandertreffen.

10. Vorrichtung nach Anspruch 9,
**dadurch gekennzeichnet,**
**daß** jeweils zwei einander zumindest teilweise zugekehrte Sprühdüsen genau gegenüberliegen und derart ausgerichtet sind, daß die Sprühstrahlen in einem Winkel von 150° bis 180° aufeinandertreffen.

11. Vorrichtung nach Anspruch 9 oder 10,
**dadurch gekennzeichnet,**
**daß** die Fließrinne oder aus Modulen zusammengesetzte Wirbelschichtgranulieranlage einen Granulataustrag mit integriertem Sichter und Vorrichtungen zur Rückführung von Unterkorn in die Wirbelschicht aufweist.

12. Vorrichtung nach einem der Ansprüche 9 bis 11,
**dadurch gekennzeichnet,**
**daß** die Fließrinne in mehrere Kammern unterteilt ist und die Zwischenwände als kombiniertes Unter- und Überlaufwehr ausgebildet sind.

## Claims

1. Process for the production of granules by fluidized bed spray granulation, comprising spraying of one or more liquid starting substances by means of spray nozzles into a fluidized bed containing substantially smaller solid particles than the granules to be produced, evaporation of volatile constituents of the sprayed starting substance(s), feeding of seeds into the fluidized bed or/and formation of seeds therein and discharge of granules from the fluidized bed,
**characterized in that**
the fluidized bed spray granulation is carried out in a flow channel with spray nozzles arranged along the flow channel on both sides above the inflow base and below the upper limit of the fluidized bed, wherein in each case at least two spray nozzles at least partly facing each other are aligned such that the spray jets meet each other frontally or at an angle of between 90° and 180° and **in that** the sprayed amount is set such that their spray jets meet each other within the fluidized bed and there is substantially no overspray of liquid on to a surface bordering the fluidized bed or out of the fluidized bed.

2. Process according to claim 1,
**characterized in that**
the spray jets meeting each other form an angle of between 150° and 180°.

3. Process according to one of claims 1 to 2,
**characterized in that**
the triangular area formed by the connecting line between two spray nozzles facing each other and their spray jets forms an angle to the horizontal of between 0° and +90°, in particular greater than 0° and +15°.

4. Process according to one of claims 1 to 3,
**characterized in that**
the particular total impulse of spray jets meeting each other is substantially the same size.

5. Process according to one or more of claims 1 to 4,
**characterized in that**
one or more nozzles pairs opposite each other are arranged along the flow channel within the height of the fluidized bed.

6. Process according to one or more of claims 1 to 5,
**characterized in that**
a sifting is carried out before or after discharge of the granules and granules of too low a particle size are recycled to the fluidized bed.

7. Process according to one or more of claims 1 to 6,
**characterized in that**
a flow channel divided into several chambers is used, the dividing walls between the chambers being constructed as weirs which each have a horizontal gap at the bottom and at the height of the expanded fluidized bed.

8. Process according to one or more of claims 1 to 7,
**characterized in that**
the spray nozzles used are three-component nozzles, with which two liquid starting substances can be sprayed by means of a gas and the sprayed liquid starting substances first come into contact with one another outside the nozzle.

9. Device for fluidized bed spray granulation for carrying out the process according to one of claims 1 to 9 [sic], comprising a flow channel (1), or a rectangular fluidized bed granulating unit composed of modules like flow channels lying side by side parallel to one another, containing an inflow base (3), devices for feeding in and removing a fluidizing gas (6 and 7), devices for discharging granules (11) and, if necessary, introducing seeds and/or other particles smaller than the granules to be produced (10) and at least two spray nozzles (8) for spraying one or more liquid starting substances,
**characterized in that**
on both sides (4 and 4') along the flow channel or modules like flow channels are arranged spray nozzles at a height above the inflow base and below the upper limit of the fluidized bed, in each case two spray nozzles (8.4 and 8.4'), which are opposite exactly or in staggered form, being aligned such that the spray jets of these spray nozzles which at least partly face each other meet each other within the region of the fluidized bed.

10. Device according to claim 9,
**characterized in that**
in each case two spray nozzles which at least partly face each other are aligned exactly opposite and such that the spray jets meet each other at an angle of 150° to 180°.

11. Device according to claim 9 or 10,
**characterized in that**
the flow channel or fluidized bed granulating unit composed of modules has a granule discharge with an integrated sifter and devices for recycling undersized particles into the fluidized bed.

12. Device according to one of claims 9 to 11,
**characterized in that**
the flow channel is divided into several chambers and the intermediate walls are constructed as a combined under- and overflow weir.

## Revendications

1. Procédé de production de granulés par granulation par pulvérisation en lit fluidisé, comprenant la pulvérisation d'un ou de plusieurs produits de départ liquides au moyen de buses de pulvérisation dans un lit fluidisé contenant des particules solides essentiellement plus petites que les granulés à produire, la vaporisation des composants volatils du ou des produits de départ pulvérisés, l'amenée de germes dan le lit fluidisé et/ou la formation des germes dans celui-ci et le soutirage des granulés du lit fluidisé,
**caractérisé en ce qu'**
on réalise la granulation par pulvérisation en lit fluidisé dans une rigole d'écoulement avec des buses de pulvérisation disposées le long de la rigole d'écoulement, des deux côtés au-dessus du fond de soufflage et en dessous de la limite supérieure de lit fluidisé,
on dirige respectivement au moins deux buses de pulvérisation tournées au moins en partie l'une vers l'autre, de sorte que les jets pulvérisés se percutent de front ou font un angle compris entre 90° et 180°, et on ajuste la quantité pulvérisée de telle sorte que les jets pulvérisés se rencontrent à l'intérieur du lit fluidisé et qu'il n'y a essentiellement pas d'impact du liquide sur une surface délimitant le lit fluidisé ni de sortie de ce liquide hors du lit fluidisé.

2. Procédé selon la revendication 1,
**caractérisé en ce que**
les jets pulvérisés qui se rencontrent font entre eux un angle compris entre 150° et 180°.

3. Procédé selon l'une des revendications 1 à 2,
**caractérisé en ce que**
la surface triangulaire formée par la ligne de liaison entre deux buses se faisant face et leurs jets pulvérisés fait un angle avec l'horizontale compris entre 0° et + 90°, notamment entre plus de 0° et +15°.

4. Procédé selon l'une des revendications 1 à 3,
**caractérisé en ce que**
les impulsions globales de chaque jet pulvérisé qui se contrent sont essentiellement d'égale importance.

5. Procédé selon l'une ou plusieurs des revendications 1 à 4,
**caractérisé en ce qu'**
on implante une ou plusieurs paires de buses qui se font face le long de la rigole d'écoulement à l'intérieur de la hauteur du lit fluidisé.

6. Procédé selon l'une ou plusieurs des revendications 1 à 5,
**caractérisé en ce que**
pendant ou après le soutirage des granulés on réalise une classification et on recycle les granulés de taille trop faible dans le lit fluidisé.

7. Procédé selon l'une ou plusieurs des revendications 1 à 6,
**caractérisé en ce qu'**
on utilise une rigole d'écoulement divisée en plusieurs chambres, où respectivement les parois de séparation entre les chambres sont constituées de chicanes formant une fente horizontale au fond et en haut du lit fluidisé formé.

8. Procédé selon l'une ou plusieurs des revendications 1 à 7,
**caractérisé en ce qu'**
on utilise comme buses de pulvérisation des buses à trois produits dans lesquelles on pulvérise deux produits de départ liquides à l'aide d'un gaz et les produits de départ liquides pulvérisés ne viennent en contact l'un avec l'autre qu'à l'extérieur de la buse.

9. Dispositif de granulation par pulvérisation en lit fluidisé pour réaliser le procédé selon l'une des revendications 1 à 8, comprenant une rigole d'écoulement (1) ou une unité de granulation en lit fluidisé rectangulaire composée de modules en forme de rigoles d'écoulement placés parallèlement l'un à côté de l'autre, comprenant un fond de soufflage (3), des dispositifs pour apporter ou extraire un gaz de fluidisation (6 et 7), des dispositifs pour soutirer du granulé (11) et, si nécessaire, incorporer des germes et/ou d'autres particules plus petites que les granulés à produire (10) ainsi qu'au moins deux buses de pulvérisation (8) pour pulvériser un ou plusieurs produits de départ liquides,
**caractérisé en ce que**
de chaque côté (4, 4') de la rigole d'écoulement ou des modules en forme de rigoles d'écoulement, on a placé des buses de pulvérisation à une hauteur comprise entre le dessus du fond de soufflage et en dessous de la limite supérieure du lit fluidisé, où respectivement deux buses de pulvérisation se faisant face exactement ou en décalage (8.4 et 8.4') sont orientées, de sorte que les jets pulvérisés de ces buses de pulvérisation au moins en partie dirigées l'une vers l'autre se percutent à l'intérieur du domaine du lit fluidisé.

10. Dispositif selon la revendication 9,
**caractérisé en ce que**
respectivement deux buses de pulvérisation dirigées au moins partiellement l'une vers l'autre coïncident exactement ou sont décalées de telle sorte que les jets pulvérisés se percutent selon un angle de 150° à 180°.

11. Dispositif selon les revendications 9 ou 10,
**caractérisé en ce que**
la rigole d'écoulement ou le dispositif de granulation en lit fluidisé composé de modules présente un soutirage de granulées à classificateur intégré et des dispositifs pour recycler les grains plus fins dans le lit fluidisé.

12. Dispositif selon l'une des revendications 9 à 11,
**caractérisé en ce que**
la rigole d'écoulement est divisée en plusieurs chambres et les parois intermédiaires sont constituées en chicanes à écoulement inférieur et à trop plein.
